# EUROPÄISCHE PATENTANMELDUNG

(11) **EP 2 774 899 A1**
(43) Veröffentlichungstag der Anmeldung: **10.09.2014**
(21) Anmeldenummer: 13158019.3
(22) Anmeldetag: 06.03.2013
(51) Int. Cl.: C04B 24/26, C08F 220/28, C04B 103/40

(54) **Polycarboxylatether mit verzweigten Seitenketten**

(71) Anmelder: Construction Research & Technology GmbH, 83308 Trostberg (DE)
(72) Erfinder: Dengler, Joachim, 83342 Tacherting (DE); Kraus, Alexander, 83132 Pittenhart (DE); Al-Hellani, Rabie, 67059 Ludwigshafen (DE); Müller-Cristadoro, Anna, 65529 Waldems (DE); Flakus, Silke, 85560 Ebersberg (DE); Zeminian, Nicoletta, . 31100 Treviso (IT); Ros, Ida, 31059 Zero Branco TV Italy (IT)

(57) **Zusammenfassung**

Die Erfindung betrifft die Verwendung eines Copolymers zum Dispergieren von anorganischen Bindemitteln, wobei das Copolymer als Comonomere einpolymerisiert mindestens ein ethylenisch ungesättigtes Säuremonomer und mindestens ein ethylenisch ungesättigtes, verzweigtes Polyethermakromonomer enthält. Weiterhin sind betroffen Dispergiermittel für anorganische Bindemittel, umfassend ein erfindungsgemäßes Copolymer und Baustoffmischungen enthaltend anorganische Bindemittel und ein erfindungsgemäßes Dispergiermittel.

## Beschreibung

Die vorliegende Erfindung betrifft die Verwendung eines Copolymers zum Dispergieren von anorganischen Bindemitteln, wobei das Copolymer als Comonomere einpolymerisiert enthält:
(A) mindestens ein ethylenisch ungesättigtes Säuremonomer,
(B) mindestens ein ethylenisch ungesättigtes, verzweigtes Polyethermakromonomer der allgemeinen Formel E-VₖLₖ₊₁, wobei
   E eine ethylenisch ungesättigte Struktureinheit ist, welche mindestens eine Ether-, Carbonsäureester-, oder Carbonsäureamid-Struktureinheit umfasst,
   V eine verzweigte Struktureinheit der Formel -CH(CH₂O-)₂ ist, und
   L eine lineare Struktureinheit der Formel -[A¹O]ₗ-A² ist, wobei
   A¹ jeweils unabhängig aus C₂-C₁₀-Alkylen, C₆-C₁₀-Arylen und/oder C₇-C₁₀-Aralkylen ausgewählt ist, vorzugsweise -C₂H₄-,
   A² jeweils unabhängig aus C₁-C₃₀-Alkyl, C₃-C₁₀-Cycloalkyl, C₆-C₃₀-Aryl und/oder C₇-C₃₀-Aralkyl, vorzugsweise C₁-C₄ Alkyl, ausgewählt ist,
   k eine ganze Zahl von 1 bis 7, vorzugsweise von 1 bis 3, ist und
   l jeweils unabhängig eine ganze Zahl von 1 bis 350, vorzugsweise von 2 bis 100, insbesondere von 5 bis 70 und besonders bevorzugt von 7 bis 17 ist.

Es ist bekannt, dass man wässrige Aufschlämmungen von pulverförmigen anorganischen oder organischen Substanzen, wie Tonen, Silikatmehl, Kreide, Ruß, Gesteinsmehl und hydraulischen Bindemitteln zur Verbesserung ihrer Verarbeitbarkeit, d.h. Knetbarkeit, Streichfähigkeit, Spritzbarkeit, Pumpbarkeit oder Fließfähigkeit, oft Zusatzmittel in Form von Dispergiermitteln zugibt. Derartige Zusatzmittel sind in der Lage, Feststoffagglomerate aufzubrechen, die gebildeten Teilchen zu dispergieren und auf diese Weise die Fluidität zu verbessern. Dieser Effekt wird insbesondere auch gezielt bei der Herstellung von Baustoffmischungen, die hydraulische Bindemittel, wie Zement, Kalk, Gips, Kalziumsulfat-Hemihydrat (Bassanit) oder wasserfreies Kalziumsulfat (Anhydrit) oder latent hydraulische Bindemittel wie Flugasche, Hochofenschlacke oder Puzzolane enthalten, ausgenutzt.

Um diese Baustoffmischungen auf der Basis der genannten Bindemittel in eine gebrauchsfertige, verarbeitbare Form zu überführen, ist in der Regel wesentlich mehr Anmachwasser erforderlich, als für den nachfolgenden Hydratations- und Erhärtungsprozess notwendig wäre. Der durch das überschüssige, später verdunstende Wasser gebildete Hohlraumanteil im Betonkörper führt zu signifikant verschlechterten mechanischen Festigkeiten und Beständigkeiten.

Um diesen überschüssigen Wasseranteil bei einer vorgegebenen Verarbeitungskonsistenz zu reduzieren und/oder die Verarbeitbarkeit bei einem vorgegebenen Wasser/Bindemittel-Verhältnis zu verbessern, werden Zusatzmittel eingesetzt, die im Allgemeinen als Wasserreduktionsmittel oder Fließmittel bezeichnet werden. Als derartige Mittel werden in der Praxis insbesondere Copolymere eingesetzt, welche durch radikalische Copolymerisation von Säuremonomeren mit Polyethermakromonomeren hergestellt werden. Betonverflüssiger werden neben anderen Additiven dem Beton zugesetzt, um entweder bei gleichbleibendem Wasser-Zement-Wert die Verarbeitbarkeit zu erleichtern oder die plastische Viskosität bei verringerten Wasser-Zement-Werten zu erhalten. Dadurch kann z.B. die Pumbarkeit des Beton verbessert werden oder die Druckfestigkeit und Dichtheit erhöht und die Aushärtezeit verkürzt werden. Als Betonverflüssiger werden heute Lignosulfonate, sulfonierte Melamin-Formaldehydharze und Naphthalin-Formaldehydharze, sowie Polycarboxylate verwendet. Beispiele für Polycarboxylate sind beispielsweise Copolymere aus Maleinsäure und/oder Acrylsäure mit Polyethermakromonomeren (z.B. alkoxylierte Vinylether oder (Meth)acrylatester von Alkylpolyalkylenglykolen).

Auf Polycarboxylatethern (PCE) basierende Dispergiermittel können individuell den Bedürfnissen der Betonindustrie angepasst werden. Dies geschieht durch eine Modifikation der chemischen Zusammensetzung der Copolymere. PCEs haben im Allgemeinen eine Polymerhauptkette aus Kohlenstoffatomen und Seitenketten, welche Polyetherstrukturen umfassen. An der Polymerhauptkette befinden sich Säuregruppen. Es ist möglich die Seitenkettenlänge und die Molverhältnisse der Säuregruppen und Polyetherseitenketten zu modifizieren um Beton von einer sehr hohen Qualität zu erhalten.

Für den Fertigteilwerkbeton werden Fließmittel gefordert, welche eine sehr hohe Verflüssigungswirkung, ein schnelles Abbinden, gute Frühfestigkeit und eine niedrige Viskosität des damit hergestellten Betons ermöglichen. Hohe Verflüssigungswirkung kombiniert mit guten Frühfestigkeiten liefern jedoch derzeit nur Fließmittel mit relativ langen (größer als 3.000 g/mol) Polyetherseitenketten, wie zum Beispiel beschrieben in der WO/05075529 A2. Dies führt jedoch meist dazu, dass der Frischbeton eine recht hohe Viskosität aufweist. Dadurch ist der Frischbeton, speziell bei niedrigen W/Z-Werten, sehr schwer zu platzieren und nur schwer formbar. Das Füllen der Formen im Fertigteilwerk ist so nur mit hohem Aufwand zu gewährleisten.

Pumpbeton und Transportbeton benötigen ein relativ großes Zeitfenster, in dem der Beton eine gleiche Konsistenz und Verarbeitbarkeit besitzt. Hier spielen die Mischzeiten eher eine untergeordnete Rolle, der Slumperhalt (Konsistenzerhalt) ist hier jedoch sehr wichtig. Da der Pumpendruck mit der Viskosität korreliert (Buckingham-Reiner Gleichung), sollte um den mechanischen Abrieb und instrumentellen Aufwand möglichst gering zu halten, die Viskosität auch beim Pumpbeton über lange Zeit möglichst gering sein. Wie vorstehend beim Fertigteilbeton erwähnt, sind hohe Viskositäten des Frischbetons bezüglich der Verarbeitbarkeit sehr nachteilig.

Für die genannten Anwendungen gibt es jedoch zur Zeit keine akzeptablen Lösungen, welche eine ausreichende Dispersibilität und insbesondere geringe Viskositäten des Betons vereinen.

Als Betonzusatzmittel, welches eine relativ niedrige Viskosität des Betons liefert, ist beispielsweise OPTIMA^{®} 100 der Firma Chryso zu nennen. Dieses nicht auf einer Polycarboxylattechnologie basierende Dispergiermittel (phosphonierter Polyether, entsprechend der WO 2010/112775 A1) ist in seiner Verwendung jedoch eingeschränkt, da es vor allem bei niedrigen W/Z-Werten oft nicht ausreichende Verflüssigung aufweist. Das besagte Produkt hat auch oftmals verzögernde Eigenschaften und ist meist für den Fertigteilbeton nicht so gut geeignet.

Derzeit erfordert der Markt Dispergiermittel, welche eine hohe Dispergierwirkung, eine niedrige Viskosität des Betons und eine gute Frühfestigkeitsentwicklung des Betons ermöglichen.

Im Stand der Technik (US2011/0015361 A1) sind Copolymere offenbart, welche in ein polymerisierter Form mindestens eine ethylenisch ungesättigte Mono- oder Dicarbonsäure und mindestens eine Struktureinheit der allgemeinen Formel 1 aufweist. Die allgemeine Formel 1 überlappt teilweise mit den verzweigten Polyethermakromonomeren (B) dieser Erfindung. Allerdings gibt die US2011/0015361 A1 keinerlei Hinweis auf eine Verwendung als Wasserreduktionsmittel in anorganischen Bindemitteln oder Beton, sondern offenbart vielmehr Anwendungen als Verdicker in den Bereichen Wasch- und Reinigungsmittel (Textilbereich) und auch im Kosmetikbereich.

Aufgabe der vorliegenden Patentanmeldung ist es Dispergiermittel zum Dispergieren von anorganischen Bindemitteln zur Verfügung zu stellen, insbesondere Dispergiermittel für die Verwendung in zementären Systemen wie Beton und Mörtel, welche eine ausreichende Dispergierwirkung und insbesondere eine niedrige Viskosität des Betons des Betons ermöglichen.

Die Aufgabe wird gelöst durch die Verwendung eines Copolymers zum Dispergieren von anorganischen Bindemitteln, wobei das Copolymer als Comonomere einpolymerisiert enthält:
(A) mindestens ein ethylenisch ungesättigtes Säuremonomer,
(B) mindestens ein ethylenisch ungesättigtes, verzweigtes Polyethermakromonomer der allgemeinen Formel E-VₖLₖ₊₁, wobei die Parameter E, V, ₖ und L wie vorstehend genannt definiert sind.

Bevorzugt ist die Verwendung, dadurch gekennzeichnet, dass das anorganische Bindemittel aus Zementen, insbesondere Portlandzementen und Aluminatzementen, aus a-Calciumsulfathemihydrat, β-Calciumsulfathemihydrat, Anhydrit und Kalk, aus Schlacken, insbesondere Hochofenschlacke, Hüttensand, Hüttensandmehl, elektrothermischer Phosphorschlacke und Edelstahlschlacke, aus puzzolanischen Bindemitteln, insbesondere Flugaschen, vorzugsweise Braunkohleflugasche und Steinkohleflugasche, Mikrosilika, Metakaolin, natürlichen Puzzolanen, insbesondere Tuff, Trass und Vulkanasche, natürlichen und synthetischen Zeolithen, gebranntem Ölschiefer sowie Mischungen davon ausgewählt ist. Bevorzugt ist als Bindemittel (Portland)-zement. Die Dosierung der erfindungsgemäßen Fließmittel beträgt bevorzugt von 0.1 bis 1 Gew. % bezogen auf das oder die anorganischen Bindemittel, bevorzugt 0.2 bis 0.6 Gew. %.

### Erfindungsgemäße Copolymere (Dispergiermittel)

Bezüglich des Dispergiermechanismus der Polycarboxylatether geht man in der Modellvorstellung davon aus, dass sich die anionisch geladenen Säuregruppen der Polycarboxylatether auf die durch Calciumionen eine positive Ladung aufweisenden Zementkornoberflächen anlagern. Die hydrophilen Polyetherseitenketten weisen überwiegend vom Zementkorn weg in die ebenfalls hydrophile wässrige Porenlösung des mit Wasser angemachten zementären Bindemittels.

Die erfindungsgemäßen Dispergiermittel enthalten im Gegensatz zu linearen Polyetherseitenketten des Stands der Technik zumindest einfach oder auch mehrfach verzweigte Polyetherseitenketten. Die Polyethermakromonomere (B) dieser Erfindung sind bei gleicher Masse sicherlich sterisch anspruchsvoller. Insbesondere unterscheiden sie sich in ihrer Länge (bei gleicher Masse), wobei die erfindungsgemäßen Polyethermakromonomere (B) aufgrund der Verzweigung kürzer sind. Überraschenderweise wurde gefunden, dass diese strukturellen Unterschiede zu einer Reduktion der Viskosität von Frischbeton führen. Dies hat den Vorteil, dass eine relativ hohe Verflüssigungswirkung und vor allem eine niedrige Viskosität (bessere Verarbeitbarkeit/Pumpbarkeit) erzielt werden kann.

Bei herkömmlichen PCEs mit unverzweigten, insbesondere langen, Polyetherseitenketten kamen die Erfinder im Laufe der Arbeiten zu der Vermutung, dass als Grund für die hohe Viskosität des erhaltenen Betons eine Interaktion ("Verhaken") der langen linearen Polyetherseitenketten ineinander anzusehen ist. Dadurch kommt es auch zu Interaktionen zwischen Polyetherseitenketten, die an unterschiedlichen Zementkörnern angelagert sind, was die höhere Viskosität des Betons erklärt. Die anorganischen Bindemittelpartikel, bevorzugt Zementpartikel sind weniger gut dispergiert. Mit zunehmender Seitenkettenlänge nimmt dieser Effekt zu und die Wechselwirkungen (vermutlich vermittelt über die PCEs) zwischen den dispergierten Zementkornteilchen werden stärker, was sich makrophysikalisch in einem Ansteigen der Viskosität des Betons äußert. Im Nachfolgenden sollen die erfindungsgemäßen Dispergiermittel, welche aus Säuremonomeren (A) und Polyethermakromonomeren (B) aufgebaut sind, näher beschrieben werden.

### Säuremonomer (A)

Als (A) ethylenisch ungesättigtes Säuremonomer sind beispielsweise möglich Carbonsäuremonomere, besonders Mono- oder Dicarbonsäuremonomere, Sulphonsäuremonomere, Phosphonsäuremonomere und/oder Phosphorsäureestermonomere. Unter den Phosphoräureestermonomere sind die Phosphoräuremonoestermonomere bevorzugt, es ist auch möglich Phosphorsäurediestermonomere zu benutzen. Bevorzugt sind Carbonsäuremonomere und Phosphoräureestermonomere, Sulphonsäuremonomere sind weniger bevorzugt. Es ist möglich die genannten Säuremonomere sowohl in ihrer (teil)neutralisierten Form (durch Alkalien wie bspw. (Erd)alkalien, Ammoniak, organische Amine etc.), als auch in ihrer sauren Form einzusetzen. Es können unabhängig voneinander eine oder mehrere Arten von ethylenisch ungesättigten Säuremonomeren zum Einsatz kommen. Das Säuremonomer (A) ist bevorzugt monoethylenisch ungesättigt.

Beispiele für geeignete monoethylenisch ungesättigte Dicarbonsäuren sind Itaconsäure, Citraconsäure, Mesaconsäure, Glutaconsäure, Aconitsäure, Maleinsäure, Fumarsäure, Maleinsäureanhydrid, Itaconsäureanhydrid und Mischungen von mehreren der vorstehend genannten Verbindungen, einschließlich der jeweiligen Salze. Besonders bevorzugt ist Maleinsäure, welche auch in der Anhydridform eingesetzt werden kann.

Geeignete monoethylenisch ungesättigte Monocarbonäuren sind (Meth)acrylsäure, Ethacrylsäure, (E)- und (Z)-Crotonsäure. Bevorzugt ist (Meth)acrylsäure, insbesondere bevorzugt ist Acrylsäure.

Bevorzugt ist auch der Einsatz einer oder mehrerer monoethylenisch ungesättigten Monocarbonsäuren und einer oder mehrerer monoethylenisch ungesättigten Dicarbonsäuren, insbesondere bevorzugt sind der Einsatz von Maleinsäure und Acrylsäure.

Bevorzugt ist die Verwendung, dadurch gekennzeichnet, dass das mindestens eine einpolymerisierte ethylenisch ungesättigte Säuremonomer (A) im Copolymer als eine der folgenden Struktureinheiten (Ia) bis (Id) vorliegt: 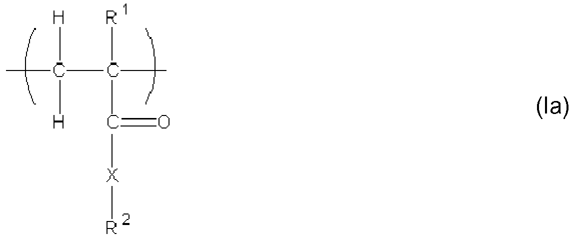 wobei
- R¹: jeweils unabhängig aus H, einer unverzweigten und/oder einer verzweigten C₁-C₄-Alkylgruppe ausgewählt ist,
- X: jeweils unabhängig aus einer Einfachbindung, -NH-(CₘH₂ₘ)- und/oder -O-(CₘH₂ₘ)- ausgewählt ist, wobei m eine ganze Zahl von 1 bis 4 ist,
- R²: jeweils unabhängig aus -OM_{1/q}, -SO₃M_{1/q}, -PO₃M_{2/q}, -O-PO₃M_{2/q}, -C₆H₄-SO₃M_{1/q}, -C₆H₄-PO₃M_{2/q} und/oder -C₆H₄-OPO₃M_{2/q} ausgewählt ist, wobei M aus H, Alkalimetallen, Erdalkalimetallen, Aluminium und/oder Metallen der ersten Übergangsreihe ausgewählt ist und q die Ladungszahl von M darstellt, mit der Maßgabe, dass R² durch -OM_{1/q} repräsentiert ist, falls X eine Einfachbindung ist; 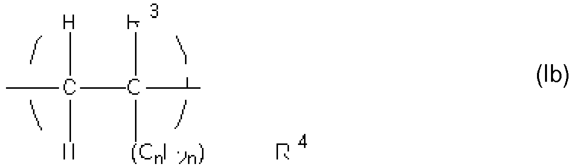
wobei
- R³: die vorstehend für R¹ angegebene Bedeutung aufweist,
- n: eine ganze Zahl von 0 bis 4 ist,
- R⁴: jeweils unabhängig aus -SO₃M_{1/q}, -PO₃M_{2/q}, -O-PO₃M_{2/q} und/oder -C₆H₄-SO₃M_{1/q} ausgewählt ist, wobei M und q die vorstehend genannten Bedeutungen aufweisen; 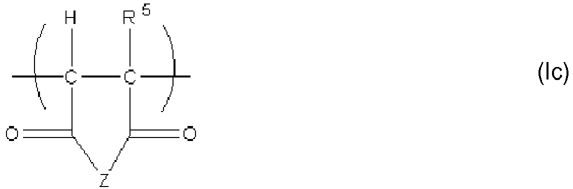
wobei
- R⁵: die vorstehend für R¹ angegebene Bedeutung aufweist,
- Z: jeweils unabhängig aus -O- und/oder -NH- ausgewählt ist; 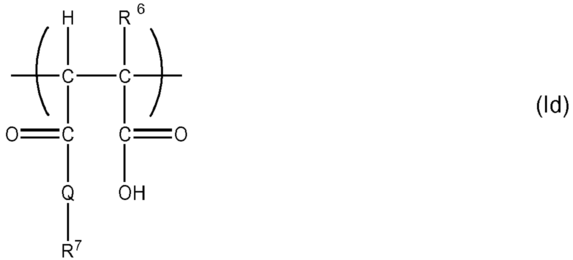
wobei
- R⁶: die vorstehend für R¹ angegebene Bedeutung aufweist,
- Q: die vorstehend für X angegebene Bedeutung aufweist,

- R⁷: die vorstehend für R² angegebene Bedeutung aufweist.

Bevorzugt ist die Verwendung, dadurch gekennzeichnet, dass in der Formel (la)
- R¹: H oder Methyl ist,
- X: jeweils unabhängig aus -NH-(CₘH₂ₘ)- und -O-(CₘH₂ₘ)- ausgewählt und bevorzugt -O-(C₂H₄)- oder -NH-(C(CH₃)₂CH₂)- ist und
- R²: -O-PO₃M_{2/q} oder -O-SO₃M_{1/q} ist,
wobei m, M und q die vorstehend angegebenen Bedeutungen aufweisen.

Als Rest R² in der Formel (la) ist weiterhin -O-PO₃M_{2/q} bevorzugt und als X -O-(CₘH₂ₘ). Besonders bevorzugt sind als phosphorhaltige Säuremonomere (A) Hydroxyethyl (meth)acrylsäurephosphorsäureester (HE(M)A-Phosphat) und Hydroxypropyl (meth)acrylsäurephosphorsäureester (HP(M)A-Phosphat) und jeweils deren Salze. Die entsprechenden Diphosphorsäureester können ebenfalls eingesetzt werden, sind aber weniger bevorzugt.

Bevorzugt ist die Verwendung dadurch gekennzeichnet, dass das Säuremonomer (A) oder die Säuremonomere (A) ausgewählt ist oder sind aus (Meth)acrylsäure und deren Salzen, Maleinsäure, deren Halbestern, Halbamiden und Salzen, Maleinsäureanhydrid und/oder Hydroxyalkyl(meth)acrylsäurephosphorsäure-estern und deren Salzen, wobei Hydroxyethyl (meth)acrylsäurephosphorsäureester und Hydroxypropyl (meth)acrylsäurephosphorsäureester und jeweils deren Salze bevorzugt sind.

### Polyethermakronomomer (B)

Die Copolymere dieser Erfindung enthalten als Comonomer einpolymerisiert mindestens ein ethylenisch ungesättigtes, verzweigtes Polyethermakronomomer (B) der allgemeinen Formel (I) E-VₖLₖ₊₁. Im Copolymer können unabhängig voneinander gleiche oder verschiedene Polyethermakronomomere (B) zum Einsatz kommen.

(B) enthält in der allgemeinen Formel (I) eine ethylenisch ungesättigte, bevorzugt eine monoethylenisch ungesättigte Struktureinheit E, welche mindestens eine Ether-, Carbonsäureester-, oder Carbonsäureamid-Struktureinheit umfasst. Die Ether-, und Carbonsäureester-Struktureinheit umfassen bevorzugt ausschließlich Sauerstoffatome, im Gegensatz zu zum Beispiel schwefelhaltigen Ausführungsformen wie Schwefel-Ether. Bevorzugt umfasst die Struktureinheit E zwei bis sechs Kohlenstoffatome und mindestens ein Sauerstoffatom, besonders bevorzugt zwei bis fünf Kohlenstoffatome und mindestens ein Sauerstoffatom.

Beispiele für E, welche Ether umfassen sind CH₂=CH-O-, CH₂=CH-O-(CH₂)₄-O-, CH(CH₃)=CH-O-, CH₂=CH-O-[A³O]ₘ-, wobei -A³ jeweils unabhängig aus C₂-C₁₀-Alkylen, C₆-C₁₀-Arylen und/oder C₇-C₁₀-Aralkylen ausgewählt ist, vorzugsweise ist A³ - C₂H₄-, ₘ ist jeweils unabhängig eine ganze Zahl von 1 bis 50, bevorzugt von 2 bis 40, insbesondere bevorzugt von 5 bis 25. Besonders bevorzugt ist, dass A³ jeweils unabhängig voneinander zu mehr als 60 mol % bezogen auf alle Struktureinheiten der Formel -[A³O]ₘ als -C₂H₄- vorliegt. Bei den vorstehend genannten Ethern handelt es sich um Vinlyether, da sich ein Sauerstoffatom direkt an der ungesättigten Struktureinheit befindet. Vinlyether sind bevorzugt, weil sie relativ reaktiv sind und leicht herzustellen sind.

Als weitere Beispiele E, welche Ether umfassen, sind zu nennen die (Meth)allylether (CH₂=CH-CH₂-O-, bzw. CH₂=C(Me)-CH₂-O-) und die Isoprenolether (CH₂=CMe-(CH₂)₂-O-).

Bei den ethylenisch ungesättigten Carbonsäureestern sind bevorzugt Monocarbonsäurederivate und Dicarbonsäurederivate zu unterscheiden.

Beispiele für monoethylenisch ungesättigte Struktureinheiten E aus dem Bereich der Monocarbonsäurederivate sind (Meth)acrylsäureester wie CH₂=CH-COO-, CH₂=CMe-COO-, CH₂=CH-COO-[A³O]ₘ-, CH₂=CMe-COO-[A³O]ₘ- und die entsprechenden Ester der (E)- und (Z)-Crotonsäure wie CH(Me)=CH-COO-, CH(Me)=CH-COO-[A³O]ₘ-. A³ und m, einschließlich der bevorzugten Bereiche, sind wie vorstehend genannt definiert.

Beispiele für monoethylenisch ungesättigte Struktureinheiten E aus dem Bereich der Dicarbonsäurederivate sind Halbester der Maleinsäure (HOOCH=CH(COO)-), die entsprechenden Ester der Fumarsäure und der Itaconsäure (CH₂=C-C(COOH)(CH₂-COO).

Als Beispiele für Struktureinheiten E, die Carbonsäureamid-Struktureinheiten umfassen sind zu nennen (Meth)acrylsäureamide wie CH₂=CH-CO-N(R)- , CH₂=CMe-CON(R)-und Maleinsäurehalbamid (HOOCH=CH-CO-N(R))-, wobei R jeweils unabhängig voneinander ausgewählt ist aus H, C₁-C₃₀-Alkyl, C₆-C₃₀-Aryl und/oder C₇-C₃₀-Aralkyl, vorzugsweise ist R gleich H oder C₁-C₄ Alkyl, insbesondere ist Methyl aus C₁-C₄ Alkyl bevorzugt.

Bevorzugt ist die Verwendung von Copolymeren, dadurch gekennzeichnet, dass die Struktureinheit E jeweils unabhängig aus einer Vinylether-, Allylether-, Isoprenylether, (Meth)acrylsäureester-, (Meth)acrylsäureamid-, Maleinsäurehalbester- und/oder einer Maleinsäurehalbamid-Einheit ausgewählt ist. Insbesondere bevorzugt sind Vinylether-, (Meth)acrylsäureester- und/oder (Meth)acrylsäureamid-Einheiten.

Bevorzugt ist die erfindungsgemäße Verwendung dadurch gekennzeichnet, dass das Copolymer als zusätzliches Comonomer ein unverzweigtes Polyethermakromonomer der allgemeinen Formel E-L einpolymerisiert enthält, wobei E und L die vorstehend angegebenen Bedeutungen aufweisen. Im unverzweigten Polyethermakromonomer E-L ist L bevorzugt eine lineare Struktureinheit der Formel -[A¹O]ₗ-A², wobei A¹ jeweils unabhängig aus C₂-C₁₀-Alkylen, C₆-C₁₀-Arylen und/oder C₇-C₁₀-Aralkylen ausgewählt ist, vorzugsweise -C₂H₄-, A² jeweils unabhängig aus C₁-C₃₀-Alkyl, C₃-C₁₀-Cycloalkyl, C₆-C₃₀-Aryl und/oder C₇-C₃₀-Aralkyl, vorzugsweise C₁-C₄ Alkyl, ausgewählt ist und I jeweils unabhängig eine ganze Zahl von 7 bis 30, vorzugsweise von 12 bis 25, insbesondere bevorzugt von 15 bis 20 ist.

Der über den Parameter I definierte bevorzugte Bereich der Seitenkettenlänge hat den Vorteil, dass die mittelmäßig langen Seitenketten (bevorzugt von 7 bis 30) einen wichtigen Beitrag zur Dispersibilität leisten können, aber noch nicht durch übermäßige Länge die Viskosität in der Anwendung, insbesondere im Beton, erhöhen.

Bevorzugt ist die Verwendung von Copolymeren, dadurch gekennzeichnet, dass die ethylenisch ungesättigte Struktureinheit E als E*-S vorliegt, wobei E* jeweils unabhängig aus einer Vinylether-, Allylether-, (Meth)acrylsäureester- und/oder einer Maleinsäurehalbester - Einheit ausgewählt ist und S eine (Poly)alkylenglykoleinheit -[A³O]ₘ- ist, wobei A³ jeweils unabhängig aus C₂-C₁₀-Alkylen, C₆-C₁₀-Arylen und/oder C₇-C₁₀-Aralkylen ausgewählt ist, vorzugsweise ist A³ -C₂H₄-, ₘ ist jeweils unabhängig eine ganze Zahl von 1 bis 50, bevorzugt von 1 bis 40, insbesondere bevorzugt von 1 bis 25. Besonders bevorzugt ist, dass A³ jeweils unabhängig voneinander zu mehr als 60 mol % bezogen auf alle Struktureinheiten der Formel -[A³O]ₘ als -C₂H₄- vorliegt.

Wenn E als E*-S vorliegt, ist bevorzugt zwischen E* und der sterisch relativ anspruchsvollen, verzweigten Struktureinheit VₖLₖ₊₁ mindestens eine Alkylenoxydeinheit als ein sogenannter "Abstandshalter" (abgekürzt als S) vorhanden. Dies führt zu einer höheren Reaktivität bei der Synthese des Polyethermakromonomeren (B) (Veretherung bzw. Veresterung, wie nachstehend aufgezeigt wird) und erhöht die Ausbeute an (B). Im Falle von Aminen ist die Reaktivität gegenüber (Meth)acrylsäure, (Meth)acrylsäureanhydrid, (Meth)acrylsäurechlorid oder Maleinsäureanhydrid ohnehin höher, da Carbonsäureamide gebildet werden. Ein Abstandshalter bringt damit nicht so große Reaktivitätsvorteile.

In der allgemeinen Formel (I) steht V für eine verzweigte Struktureinheit -CH(CH₂O-)₂. V ist eine relativ hydrophile und damit zur Wasserlöslichkeit von (B) beitragende Polyetherstruktureinheit. Zur Verdeutlichung soll noch erwähnt werden, dass die eigentliche Verzweigungsstelle das tertiäre Kohlenstoffatom ist, welches mit einem H-Atom und zwei (CH₂O-) substituiert ist. Das Polyethermakromonomer (B) verzweigt sich entsprechend der allgemeinen Formel (I) E-VₖLₖ₊₁ ausgehend von der ungesättigten Struktureinheit E über die verzweigte Struktureinheit Vₖ. Der Index k gibt dabei die Anzahl der Struktureinheiten V und damit der Verzweigungsstellen an. Im hypothetischen Fall (nicht erfindungsgemäß) von k gleich 0 wäre eine einfache, nicht verzweigte Seitenkette des Stands der Technik gegeben (E-L). Im Fall von k gleich 1 werden zwei Polyetherseitenketten eingeführt, im Fall von k gleich 2 werden drei Polyetherseitenketten eingeführt und so weiter.

V stammt in der Synthese des Polyethermakromonomers (B) von Glycerinderivaten ab, besonders bevorzugt von Epichlorohydrin, dessen Reaktivität unter den Glycerinderivaten am größten ist.

L ist eine lineare Struktureinheit der Formel -[A¹O]ₗ-A², wobei die Parameter A¹, A² und I vorstehend genannter Definition entsprechen. Der Index I bezeichnet die Zahl der Alkylenoxydwiederholungseinheiten und kann ebenso wie A¹ und A² in einem Polyethermakromonomer (B) unabhängig voneinander verschieden oder gleich sein, das heißt I kann verschiedene Werte im selben Polyethermakromonomer annehmen und A¹, A² können gleich oder verschieden sein.

Es handelt sich bei L um lineare, nicht verzweigte (Poly)(cyclo)alkyl-, (Poly)aryl und/oder (Poly)aralkyl-Struktureinheiten, bevorzugt (Poly)alkylen-Struktureinheiten. Die Struktureinheiten L schließen das Polyethermakromonomer ab. Die Anzahl der verzweigenden Struktureinheiten V und L ist über den Parameter k verknüpft. Dabei ergibt sich die einfache Regel, dass die Anzahl der linearen Struktureinheiten L um 1 größer ist als die der verzweigenden Struktureinheiten V. L stellt eine hydrophile und gut wasserlösliche Struktureinheit dar, wenn A¹ C₂H₄- ist. A¹ ist aus diesem Grund bevorzugt C₂H₄-.

L stammt in der Synthese des Polyethermakromonomers (B) von Monoalkoholen der Formel HO-[A¹O]₁-A² ab.

### Synthese der Polyethermakromonomere (B)

Die Synthese der Polyethermakromonomere (B) erfolgt in einem mindestens zweistufigen Prozess. Man unterscheidet dabei die Prozesstufe (I) der Umsetzung eines linearen Monoalkohols zu einem verzweigten Monoalkohol und die Prozesstufe (II), welche die Umsetzung des erhaltenen verzweigten Monoalkohols zum ethylenisch ungesättigten Polyethermakromonomer (B) umfasst (Veretherung oder Veresterung mit geeigneten ethylenisch ungesättigten Reagenzien).

Optional kann der verzweigte Monoalkohol in einigen Zwischenstufen noch in ein Amin verwandelt werden, worauf anschließend in der Prozesstufe (II) bei der Reaktion mit geeigneten ethylenisch ungesättigten Carbonsäuren oder Carbonsäurederivaten die Ausbildung von Carbonsäureamiden erfolgt.

Ebenfalls optional kann der verzweigte Monoalkohol der allgemeinen Strukturformel (II) alkoxyliert werden, so dass ein Polyethermonoalkohol der Formel HO-[A³O]ₘ-VₖLₖ₊₁ mit einem sogenannten Abstandshalter entsteht. Im (B) Polyethermakromonomer liegt dann E als E*-S vor. Alle Parameter E*, A³, m, V, k und L haben die vorstehend genannten Bedeutungen.

### Prozesstufe (I)

Prozesstufe (I) stellt die Umsetzung eines linearen Monoalkohols der Formel HO-[A¹O]ₗ-A² mit einem Glycerinderivat, wie Glycidol, Glycerincarbonat oder Epichlorohydrin, bevorzugt Epichlorohydrin, dar. Dabei entsteht ein verzweigter Polyethermonoalkohol der allgemeinen Formel (II)

(II) HO-VₖLₖ₊₁,

wobei die Parameter V, k, L, A¹, I und A² wie vorstehend genannt definiert sind. Es ist möglich gleiche oder verschiedene Alkohole der Formel HO-[A¹O]ₗ-A² zu verwenden.

Die besagte Umsetzung erfolgt am besten in Anwesenheit von Basen, besonders wenn Epichlorohydrin verwendet wird. Die Umsetzungen kann man in Gegenwart eines Katalysators durchführen. Geeignete Katalysatoren sind beispielsweise anorganische und organische Basen. Setzt man Epichlorhydrin als reaktives Glycerinderivat ein, so dient Base nicht nur als Katalysator, sondern auch zum Neutralisieren der entstehenden Salzsäure. Geeignete anorganische Basen sind beispielsweise Alkalimetallcarbonate und insbesondere Alkalimetallhydroxide wie NaOH und KOH. Geeignete organische Basen sind beispielsweise tertiäre Amine, insbesondere Triethylamin und [2,2,2]Diazabicyclooctan (DABCO), sowie Pyridin und para-N,N-Dimethylaminopyridin.

In einer Ausführungsform der vorliegenden Erfindung kann man die Umsetzung von Glycerinderivaten, wie Glycidol oder Glycerincarbonat, bevorzugt Epichlorohydrin, in einem Lösungsmittel durchführen. Geeignete Lösungsmittel sind beispielsweise Ether, insbesondere 1,4-Dioxan, Diisopropylether, Tetrahydrofuran ("THF") und Di-n-butylether. Weitere geeignete Lösungsmittel sind n-Butylacetat ("Butylacetat"), DMSO, N,N-Dimethylformamid ("DMF") und N-Methylpyrrolidon und aromatische Lösungsmittel wie beispielsweise Toluol.

In Ausführungsformen, in denen bei der Umsetzung des linearen Monoalkohols der Formel HO-[A¹O]ₗ-A² mit einem Glycerinderivat (bspw. Glycerin) Wasser abgespalten wird, kann man ein Wasser entziehendes Mittel einsetzen, beispielsweise ein Molekularsieb, Natriumsulfat, Magnesiumsulfat, oder man kann das gebildete Wasser durch azeotrope Destillation entfernen.

Diese Umsetzungen sind im Detail beschrieben in der US2011/0015361 A1. Es ist durch gezielte Steuerung der Temperatur und der Monomermengen möglich verschiedene verzweigte Polyethermakromonomere zu erhalten, üblicherweise als Gemische. Da die Reaktivität mit steigender Zahl von k (Kettenlänge) abnimmt, ist es vorteilhaft schrittweise die Temperatur zu erhöhen. Besonders vorteilhaft ist es bei geringeren Reaktionstemperaturen nur einen Teil des Epichlorohydrins mit dem Monoalkohol der Formel (II) umzusetzen, dann weiteres Epichlorohydrin zuzusetzen und die Umsetzung bei erhöhter Temperatur fortzuführen. Diese in der US2011/0015361 A1 beschriebene Abfolge von Teilschritten (Zugabe von Epchlorohydrin, Temperaturerhöhung und chemische Umsetzung) kann mehrmals wiederholt werden.

Im Allgemeinen werden bei diesen Umsetzungen Gemische von Monoalkoholen der allgemeinen Formel (II) erhalten, mit verschiedenen Werten von k, aber auch verschiedenartiger Konstitution bei gleichem k. Im Folgenden sollen einige Beispiele möglicher Strukturen aufgeführt werden.

Für den einfachsten Fall von k gleich 1 wird beispielsweise folgender einfach verzweigter Monoalkohol (IIa) aus der Reaktion von zwei Äquivalenten linearem Monoalkohol der Formel HO-[A¹O]ₗ-A² mit einem Äquivalent Epichlorohydrin erhalten:

(IIa) HO-CH[CH₂O-[A¹O]ₗ-A¹]₂.

Ein Äquivalent (IIa) kann weiterreagieren mit einem Äquivalent Epichlorohydrin und einem Äquivalent Monoalkohole der Formel HO-[A¹O]ₗ-A² zu beispielsweise folgendem unsymmetrischen Produkt (IIb) reagieren (k = 2):

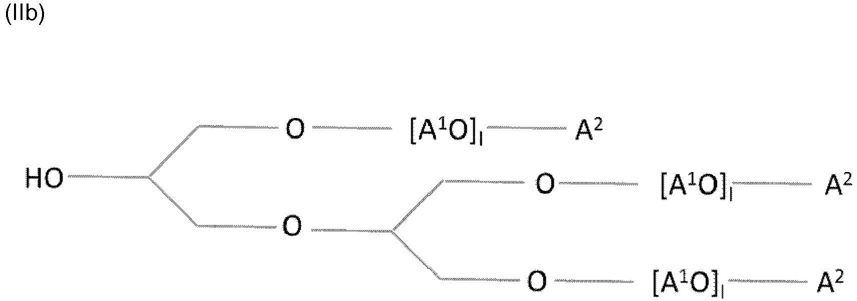

Zwei Äquivalente (IIa) können beispielsweise weiterreagieren mit einem Äquivalent Epichlorohydrin zu folgendem symmetrischen Monoalkohol (IIc) (k = 3):

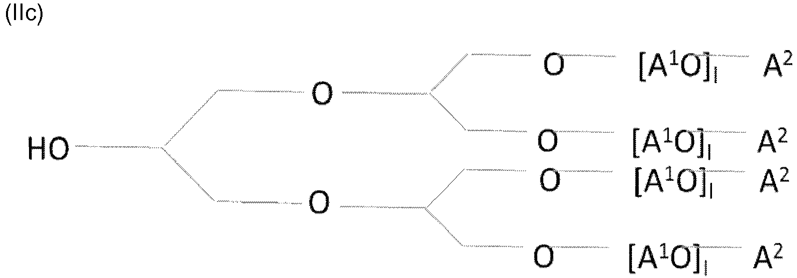

Die Strukturen (IIb) und (IIc) sind Konstitutionsisomere.

Ein Äquivalent (IIb) kann beispielsweise weiterreagieren mit einem Äquivalent Epichlorohydrin und einem Äquivalent Monoalkohol der Formel HO-[A¹O]ₗ-A² zu folgendem asymmetrischen Monoalkohol (IId) (k = 3):

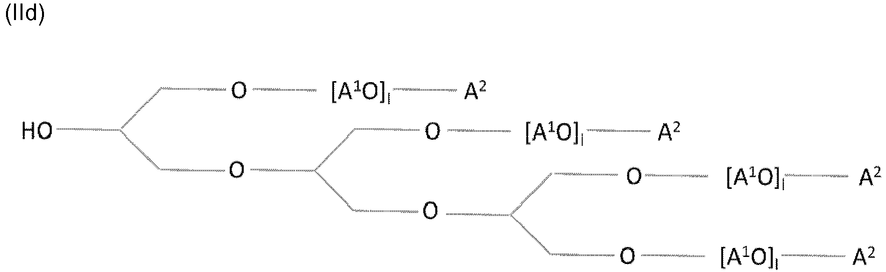

Ein Äquivalent (IIc) kann beispielsweise weiterreagieren mit einem Äquivalent Epichlorohydrin und einem Äquivalent Monoalkohol der Formel HO-[A¹O]ₗ-A² zu folgendem asymmetrischen Monoalkohol (IIe) (k = 4):

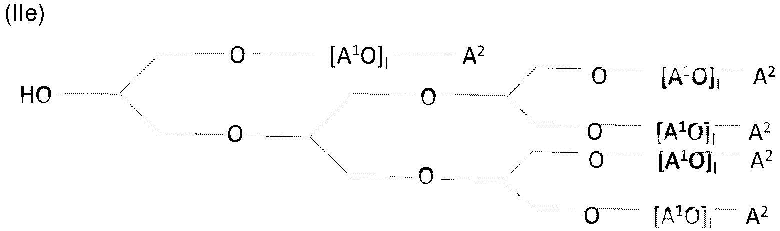

Bevorzugt ist als Polyethermakromonomer (B) eine Struktureinheit E-VₖLₖ₊₁, dadurch charakterisiert, dass VₖLₖ₊₁ einer der Formeln (IIa), (IIb), (IIc) und/oder (IId) entspricht, unter der Maßgabe, dass in den Formeln (IIa), (IIb), (IIc) und (IId) jeweils die OH-Gruppe durch eine Einfachbindung ersetzt ist. E, V und L haben dabei die vorstehend genannten Bedeutungen und k ist eine ganze Zahl von 1 bis 3.

### Optionale Überführung der verzweigten Monoalkohole (II) in Monoamine

Wie vorstehend erwähnt kann der verzweigte Monoalkohol der allgemeinen Formel (II) HO-VₖLₖ₊₁ auch durch einige Zwischenstufen in ein verzweigtes Monoamin der Formel NH(R)-VₖLₖ₊₁ umgewandelt werden (Austausch der OH-Gruppe durch eine Aminogruppe NH(R)). Dazu erfolgt zunächst im Allgemeinen eine Oxidation an der sekundären Alkoholfunktion zu einem Keton. Anschließend erfolgt eine Aminierung mit einem Amin NH₂R unter Wasserabspaltung zum entsprechenden Imin. Die Reduktion des Imins mit beispielsweise Wasserstoff in Anwesenheit von Katalysatoren (z.B. Nickel oder ähnliches) führt zum entsprechenden verzweigten Monoamin. Die Monoamine weisen die Strukturformel NH(R)-VₖLₖ₊₁ auf, wobei R die vorstehend genannten Bedeutungen hat.

### Prozesstufe (II)

In der zweiten Prozesstufe (II) kann der verzweigte Monoalkohol II (bspw. die Strukturen IIa, IIb, IIc, IId, IIe) durch die Einführung einer ethylenisch ungesättigten Struktureinheit (E) zum Polyethermakromonomer (B) modifiziert werden, beispielsweise durch die Umsetzung mit Acetylen zu einem Vinylether. Die Umsetzung mit (Meth)allylhalogeniden, bevorzugt (Meth)allylchlorid führt beispielsweise zu entsprechenden (Meth)allylethern. Mit (Meth)acrylsäure, (Meth)acrylsäureanhydrid oder (Meth)acrylsäurehalogeniden werden die entsprechenden (Meth)acrylsäureester erhalten. Die ethylenisch ungesättigte Struktureinheit kann auch durch Umsetzung mit Maleinsäureanhydrid eingeführt werden, dabei wird der entsprechende Maleinsäurehalbester erhalten.

Analog werden aus den verzweigten Monoaminen NH(R)-VₖLₖ₊₁ durch Umsetzung mit (Meth)acrylsäure, (Meth)acrylsäureanhydrid oder (Meth)acrylsäurehalogeniden die entsprechenden Carbonsäureamide erhalten oder im Fall von Maleinsäureanhydrid das Maleinsäurehalbamid.

Die jeweiligen Veresterungs-, Amidierungs-, und Veretherungsreaktionen sind im Stand der Technik gut bekannt und werden bevorzugt unter wasserentziehenden Bedingungen durchgeführt.

Zur Umsetzung mit Acetylen kann man einen oder mehrere Katalysatoren, bevorzugt gewählt aus basischen Katalysatoren einsetzen. Besonders geeignet ist KOH.

Die Umsetzung mit Acetylen kann man mit oder ohne Lösungsmittel durchführen. Geeignete Lösungsmittel sind beispielsweise N-Methylpyrrolidon, N-Ethylpyrrolidon, Toluol, Xylol, THF und Dioxan. Die Umsetzung mit Acetylen kann man beispielsweise bei Temperaturen im Bereich von 80 bis 160°C durchführen, bevorzugt sind Temperaturen um 120°C, beispielsweise 110 bis 130°C. Die Acetylierung kann man bei Normaldruck durchführen oder vorzugsweise bei erhöhtem Druck, beispielsweise bei 2 bis 30 bar.

Bevorzugt ist die erfindungsgemäße Verwendung dadurch gekennzeichnet, dass A¹ jeweils unabhängig zu mehr als 60 mol %, besonders bevorzugt zu mehr als 80 mol %, bezogen auf alle Struktureinheiten der Formel -[A¹O]ₗ als -C₂H₄- vorliegt, A² jeweils unabhängig aus C₁-C₄ Alkyl ausgewählt ist, k eine ganze Zahl von 1 bis 3 ist und I jeweils unabhängig eine ganze Zahl von 2 bis 100 ist.

Die so ausgewählten Polyethermakromonomere (B) haben den Vorteil, dass sie aufgrund des Polyalkylenoxydanteils gut wasserlöslich sind und eine gute Dispergierwirkung aufweisen.

Bevorzugt ist die erfindungsgemäße Verwendung dadurch gekennzeichnet, dass das verzweigte Polyethermakomonomer (B) ein Molekulargewicht im Bereich von 700 bis 15.000 g/mol, bevorzugt von 1.500 bis 10.000 g/mol und besonders bevorzugt von 3.000 bis 8.000 g/mol aufweist. Vorteil ist, dass eine akzeptable Dispergierwirkung und niedrige Viskositäten in der Anwendung erzielt werden können.

Bevorzugt ist die erfindungsgemäße Verwendung dadurch gekennzeichnet, dass das molare Verhältnis von (A) Säuremonomer zu (B) Polyethermakromonomer von 20/1 bis 1/1 beträgt, bevorzugt 15/1 bis 1,5/1 und besonders bevorzugt von 10/1 bis 3/1. Insbesondere bei höheren Molekulargewichten des Polyethermakromonomers (B) sind höhere Anteile an Säuremonomere (A) vorteilhaft um die höhere Masse an Polyethermakromonomer (B) durch die Anwesenheit von mehr anionischen sogenannten Ankergruppen auszugleichen, die mit der Zementoberfläche, insbesondere Calciumionen wechselwirken können. Besonders bevorzugt ist ein Molekulargewicht des Polyethermakromonomers (B) im Bereich von 3.000 bis 8.000 g/mol und ein Molverhältnis von (A) Säuremonomer zu (B) Polyethermakromonomer von 13/1 bis 3/1, insbesondere bevorzugt von 10/1 bis 5/1.

Bevorzugt ist die erfindungsgemäße Verwendung dadurch gekennzeichnet, dass das Copolymer durch radikalische Polymerisation in Anwesenheit des ethylenisch ungesättigten Säuremonomers (A) und des ethylenisch ungesättigten Polyethermakromonomers (B) erhältlich ist, so dass insgesamt mindestens 45 mol-%, bevorzugt mindestens 80 mol-% aller Struktureinheiten des Copolymers durch Einpolymerisation von Säuremonomer (A) und Polyethermakromonomer (B) erzeugt wurden. Es können auch noch weitere ethylenisch ungesättigte Monomere (C) einpolymerisiert werden. Geeignete Comonomere sind ethylenisch ungesättigte Verbindungen, die sich radikalisch mit den Comonomeren (A) und (B) copolymerisieren lassen. Beispielhaft sind zu nennen: C₁-C₁₀-Alkylester von ethylenisch ungesättigten Mono- oder Dicarbonsäuren, insbesondere von (Meth)acrylsäure, Vinylacetat, Vinylaromaten wie insbesondere Styrol und α-Methylstyrol, α-Olefine wie insbesondere C₁₂-C₂₀-α-Olefine, weiterhin Vinylchlorid, Acrylnitril und N-Vinylpyrrolidon. Bevorzugte Beispiele für C₁-C₁₀-Alkylester von ethylenisch ungesättigten Monocarbonsäuren sind Methyl(meth)acrylat, Ethyl(meth)acrylat, n-Butyl(meth)acrylat und 2-Ethylhexyl(meth)acrylat. Bevorzugt sind insbesondere C₁-C₁₀-Alkylester von ethylenisch ungesättigten Mono- oder Dicarbonsäuren, insbesondere von Acrylsäure.

Die Erfindung betrifft auch Dispergiermittel für anorganische Bindemittel, umfassend ein Copolymer gemäß der Definition eines der vorstehenden Ansprüche. Das erfindungsgemäße Dipsergiermittel kann neben den erfindungsgemäßen Copolymeren noch weitere Formulierungsbestandteile wie Rheologiehilfsmittel (bspw. Celluloseether oder Stärkeether) und/oder redispergierbare Polymerpulver, Entschäumer, air entrainer und so weiter enthalten. Auch ist es möglich weitere Polycarboxylatether in Formulierungen zu verwenden oder andere Fließmittel wie Lignosulphonate oder Melaminsulphonate.

Die Erfindung betrifft auch Baustoffmischungen enthaltend anorganische Bindemittel, bevorzugt Zement, und ein Dispergiermittel für anorganische Bindemittel, umfassend ein erfindungsgemäßes Copolymer.

Das anorganische Bindemittel oder die anorganischen Bindemittel ist oder sind dabei bevorzugt ausgewählt aus Zementen, insbesondere Portlandzementen und Aluminatzementen, aus a-Calciumsulfathemihydrat, β-Calciumsulfathemihydrat, Anhydrit und Kalk, aus Schlacken, insbesondere Hochofenschlacke, Hüttensand, Hüttensandmehl, elektrothermischer Phosphorschlacke und Edelstahlschlacke, aus puzzolanischen Bindemitteln, insbesondere Flugaschen, vorzugsweise Braunkohleflugasche und Steinkohleflugasche, Mikrosilika, Metakaolin, natürlichen Puzzolanen, insbesondere Tuff, Trass und Vulkanasche, natürlichen und synthetischen Zeolithen, gebranntem Ölschiefer sowie Mischungen davon.

Es ist möglich die erfindungsgemäßen Dispergiermittel durch übliche Trocknungsverfahren wie zum Beispiel Sprühtrocknung zu trocknen und die erhaltenen, weitgehend wasserfreien Produkte in anorganische Bindemittel einzubringen. Die so erhaltenen Trockenmörtel können durch Anmischen mit Wasser (ohne Zusatz von Fließmitteln) gleich auf der Baustelle verwendet werden. Typischerweise liegt die Dosierung des erfindungsgemäßen Dispergiermittels im Bereich von von 0.1 bis 1 Gew. % bezogen auf das oder die anorganischen Bindemittel, bevorzugt 0.2 bis 0.6 Gew. %. In den Trockenmörteln sind oft Rheologiehilfsmittel wie Celluloseether und/oder redispergierbare Polymerpulver, Entschäumer, air entrainer und so weiter enthalten.

### Beispiele:

### 1. Allgemeine Versuchsvorschrift zur Herstellung von verzweigten Polyethermonoalkoholen der allgemeinen Strukturformel (II) (HO-VₖLₖ₊₁):

In einem 2-Liter-Kolben mit Tropftrichter, Magnetrührer und Rückflusskühler wurde eine Lösung des entsprechenden Methylpolyethylenglykols (siehe Tabelle 1) in 1177 ml Dioxan vorgelegt. Unter Rühren werden 40 g KOH-Plätzchen zugegeben. Man erwärmt auf 105°C und gibt die benötigte Menge an Epichlorhydrin (entsprechend Tabelle 1), gelöst in Dioxan, über einen Zeitraum von üblicherweise 30 Minuten zu. Anschließend wird die Reaktionslösung 17 Stunden bei 105°C gerührt und dann auf Zimmertemperatur abgekühlt. Das entstandene Kaliumchlorid wird abfiltriert und das Lösemittel im Vakuum bei 35 mbar entfernt. Es wurden zehn verschiedene Typen von verzweigten Polyethermonoalkoholen der allgemeinen Strukturformel (II) (HO-VₖLₖ₊₁) erhalten und diese wurden entweder direkt zu Polyethermakromonomeren (B) der allgemeinen Strukturformel (I) (E-VₖLₖ₊₁) umgesetzt, oder wie im Fall der Probe 10 mit 10 Äquivalenten Ethylenoxyd alkoxyliert (Spacer), oder wie im Fall der Probe 4 in ein Aminderivat (allgemeine Formel NH(R)-VₖLₖ₊₁) unter Austausch der Hydroxygruppe durch eine NH₂ Gruppe umgewandelt.

In diesem Fall wurde die Aminierung folgendermaßen durchgeführt (Aminierung für Makromonomer 4):
In ein Autoklavengefäß wurde zur Durchführung der Aminierung 1 mol des verzweigten Monoalkohols und ein Katalysator (25 g) gegeben. Der Katalysator enthält Ni, Co, Cu, Al₂O₃ und Sn auf Graphit (US 2011/0137030).

Der Autoklav wurde mit Stickstoff gespült, um eine Katalysatoroxidation zu vermeiden. 42.6 g Ammoniak wurden ebenfalls in den Autoklaven gegeben und der gewünschte Wasserstoffpartialdruck von 40 bar bei Raumtemperatur eingestellt. Die Reaktion wurde durch Erhitzen gestartet und als Reaktionsbeginn das Erreichen der Temperatur von 214 °C festgelegt. Danach ließ man das Reaktionsprodukt für weitere 10 Stunden bei 210 °C unter Rühren stehen. Der Versuchsaustrag wurde mit Hilfe einer Druckfiltration von Spuren des Katalysators befreit. Man erhielt 28 g des verzweigten Amins 4.

Umsetzung mit Ethylenoxid (mit Abstandshalter modifizierter Alkohol für Makromonomer 10):
Der verzweigte Monoalkohol (1eq.) und Kaliummethylat (1 eq.) werden eingewogen und am Rotationsverdampfer bei 90°C und ca. 20 mbar Druck 120 Minuten bewegt und das bei dieser Reaktion entstehende Methanol abgezogen.

Diese Reaktionslösung wird in den vorgetrockneten Reaktor überführt, der Reaktor verschlossen und dreimal mit Stickstoff bis 5 bar inertisiert. Anschließend wird der Ansatz unter Rühren auf 120°C aufgeheizt und ein Stickstoffvordruck von 3,5 bar eingestellt. Dann werden 0,1 Äquivalente Ethylenoxid innerhalb von 20 Minuten massengesteuert dosiert. Nach Anspringen der Reaktion werden weitere 9.9 Äquivalente Ethylenoxid innerhalb von 420 Minuten massengesteuert zudosiert. Nach Dosierende wird der Ansatz weitere 420 Minuten bei 120°C gerührt. Man läßt den Ansatz auf 80°C abkühlen und spült 30 Minuten mit Stickstoff (ca. 0,5 m³/h) in die Abgasleitung und läßt das klare, gelbliche Produkt aus dem Reaktor ab. Die Ausbeute ist quantitativ.

### 2. Allgemeine Versuchsvorschrift zur Herstellung von Polyethermakromonomeren (B) der allgemeinen Strukturformel (I) (E-VₖLₖ₊₁):

### 2.1. Vinylierung zum Vinylalkohol durch Umsetzung der verzweigten Polyethermonoalkohole mit Acetylen

In einem 2,5-1-Autoklaven wurden 1 mol des verzweigten Polyethermonoalkohols und 10 g KOH vorgelegt, mit Stickstoff (2 bar) inertisiert und danach auf 120°C erhitzt. Danach wurde Acetylen mit einem Druck von 20 bar aufgepresst und die Reaktionsmischung bei 120°C und 20 bar gerührt, bis insgesamt 26 g Acetylen aufgenommen waren. Danach wurde auf Raumtemperatur abgekühlt, entspannt und der Rückstand nach Erwärmen auf 60°C für 3 h unter Rühren entgast und dann dem Autoklaven entnommen. Die Umsetzung ist quantitativ. Man vergleiche insbesondere mit der Probe Nr. 5 der Tabelle 1.

### 2.2 Umsetzung mit Methacrylsäurechlorid zum Methacrylsäureester:

0,01 mol des jeweiligen verzweigten Makroalkohols aus der Tabelle 1 (Produkt aus dem jeweiligen Methylpolyethylenglykol und Epichlorohydrin) werden bei 80°C in einem Rundkolben aufgeschmolzen. Es werden langsam 0,04 mol Triethylamin und 600 ppm p-Methoxyphenol zugegeben. Anschließend werden 0,03 mol Triethylamin zugetropft und die Mischung 6 Stunden bei 80 °C gerührt.

Nach dem Abkühlen wird die Substanz in 50 ml THF gelöst und der Niederschlag abfiltriert. Anschließend werden 30 ml einer 0,1 N HCl-Lösung zugegeben und die wässrige Phase entfernt.

Die organische Phase wird vom Lösungsmittel befreit. Es entsteht das Makromonomer mit einer Selektivität von 97 % (bestimmt durch HPLC und NMR).

### 2.3 Umsetzung mit Methacrylsäureanhydrid zum Methacrylsäureester:

0,1 mol des jeweiligen verzweigten Alkohols aus der Tabelle 1 (Produkt aus dem jeweiligen Methylpolyethylenglykol und Epichlorohydrin) werden in einem Kolben bei 90°C aufgeschmolzen. Nach Zugabe von 0,1 mol Na₂CO₃ und 0,0013 mol Butylhydroxytoluol wird 0,27 mol Methacrylsäureanhydrid zu getropft. Die Mischung wird 4 Stunden gerührt. Anschließend werden 300 ml Wasser zugegeben und 1 Stunde bei 60 °C gerührt. Die Lösung wird mit H₃PO₃ auf pH=6 gestellt. Überschüssige Methacrylsäure wird mit Wasser ausgeschüttelt oder durch Filtration über basischem Aluminiumoxid entfernt. Es entsteht das gewünschte Makromonomer in Selektivitäten von mehr als 96 % (HPLC und NMR).

**Tabelle 1: Daten der Polyethermakromonomere (B)**

| Polyethermakromonomer (B) (Nr.) | 1a | 1b | 2 | 3 | 6 | 7 | 8 | 9 | 10¹⁾ | 4²⁾ | 5 |
|---|---|---|---|---|---|---|---|---|---|---|---|
| Seitenkettenlänge (g/mol) der verwendeten Methylpolyethylenglykole (= HO-L) und Menge in mol | 750 g/mol [0,667 mol] | 750 g/mol [0,667 mol] | 2000 g/mol [0,667 mol] | 750 g/mol [0,455 mol] + 2000 g/mol [0,455 mol] | 2000 g/mol [0,247] | 350 g/mol [1,429 mol] | 350 g/mol [0,455 mol] + 705 g/mol [0,455 mol] | 350 g/mol [1,429 mol] | 750 g/mol [0,667 mol] | 750 g/mol [0,667 mol] | 350 g/mol [1,429 mol] |
| Epichlorohydrin | 0,583 mol | 0,583 mol | 0,583 mol | 0,796 | 0,216 mol | 1,072 mol | 0,796 mol | 1,250 mol | 0,583 mol | 0,583 mol | 1,250 mol |
| Molekulargewicht (mit GPC bestimmt) | 1844 g/mol | 1844 g/mol | 4057 g/mol | 4481 g/mol | 6550 g/mol | 1611 g/mol | 1636 g/mol | 1612 g/mol | 2284 g/mol | 1844 g/mol | 1864 |
| Polymerisierbare Gruppe E | Methacrylsäureester | | | | | | | | Methacrylsäure-amid | Vinylether | |

| | | | | | | | | | | | |
|---|---|---|---|---|---|---|---|---|---|---|---|
| ¹⁾ Nach der Umsetzung des Methylpolyethylenglykols mit Epichlorohydrin wurde der verzweigte Monoalkohol mit 10 Äquivalenten Ethylenoxyd alkoxyliert. ²⁾ Nach der Umsetzung des Methylpolyethylenglykols mit Epichlorohydrin wurde der verzweigte Monoalkohol hydroaminiert. 1a und 2 -10: aus Methacrylsäureanhydrid hergestellter Ester 1b: aus Methacrylsäurechlorid hergestellter Ester | | | | | | | | | | | |

### Polymerisation der Polyethermakromonomere (B) mit Methacrylsäure (Säuremonomer A):

In einen Büchi Glas-Doppelwandreaktor werden 47 g Wasser vorgelegt und auf 60 °C unter Stickstoffspülung erwärmt. Über einen Zeitraum von 4 Stunden wird nun eine Lösung aus 0,01 mol des entsprechenden Makromonomer und der entsprechenden Menge an Methacrylsäure zu getropft (Tabelle 2). Der Initiator (Natriumpersulfat) wird als 7 %-ige wässrige Lösung mit 3 mol-% bezogen auf die Menge an polymerisierbaren Doppelbindungen (Menge Makromonomer + Menge Methacrylsäure) innerhalb von 4,5 Stunden zu dosiert. Nachdem eine Stunde nachpolymerisiert wurde, wird die Polymerlösung abgekühlt und mit Natronlauge auf pH= 6,5 neutralisiert. Die Polymerlösung wird verdünnt, damit ein Feststoffgehalt von 30 % erhalten wird.

### Polymerisation der Polyethermakromonomere (B) mit Acrylsäure (Säuremonomer A):

In einem Glasreaktor, ausgestattet mit Rührer, pH-Elektrode und mehreren Zulaufeinrichtungen werden 40 g deionisiertes Wasser und 0,1 mol des entsprechenden Makromonomers vorgelegt und auf eine Polymerisationsstarttemperatur von 15 °C gebracht. Anschließend werden in einem separaten Zulaufgefäß die benötigte Menge Acrylsäure (siehe Tabelle 1) mit 16 g Wasser vermischt (Lösung A). Parallel dazu wurde eine 6%-ige Lösung von Brüggolit®E 01 hergestellt (Lösung B). Unter Rühren und Kühlen werden zunächst 0,24 g 3-Mercaptopropionsäure, 0,012 g Fe₂(SO₄)₃ und 0,64 g einer 30 %-igen wässrigen H₂O₂-Lösung gegeben. Zeitgleich dazu wird mit der Zugabe von Lösung A und B begonnen. Lösung A wir mit einer Dosiergeschwindigkeit von 24 ml/h zugegeben, Lösung B wird so lange mit einer Geschwindigkeit von 15,2 ml/h zugegeben, bis die Lösung peroxidfrei ist. Anschließend wird die erhaltene Polymerlösung mit 50 %-iger Natronlauge auf pH = 6,5 eingestellt. Die Polymerlösung wird mit Wasser verdünnt, bis sie einen Feststoffgehalt von 30 % aufweist. Die Ergebnisse der Copolymerisationen sind in der Tabelle 2 zusammengefasst.

**Tabelle 2: Copolymere aus (A) und (B)**

| Copolymer | Makromonomer (B) | (B) (mol) / (A) (mol) (Typ* von (A)) | M_{w} [g/mol] |
|---|---|---|---|
| 1 | 1a | 1/5 (MAS) | 21000 |
| 2 | 2 | 1/7 (MAS) | 27000 |
| 3 | 3 | 1/7 (MAS) | 25000 |
| 5 | 5 | 1/8 (AS) | 33000 |
| 6 | 6 | 1/7 (MAS) | 25000 |
| 7 | 7 | 1/5 (MAS) | 29000 |
| 8 | 8 | 1/5 (MAS) | 18000 |
| 9 | 9 | 1/5 (MAS) | 18000 |
| 10 | 10 | 1/5 (MAS) | 18000 |
| 11 | 1a | 1/1/5 (HEMA/MAS) | 21000 |
| 12 | 1b | 1/12 (MAS) | 23000 |
| 13 | 1b | 1/20 (MAS) | 17000 |
| 14 | 1b | 1/12 (MAS) | 20000 |
| 15 | 1b | 1/12 (MAS) | 45000 |
| 16 | 1b | 1/12 (MAS) | 24000 |

| | | | |
|---|---|---|---|
| *Abkürzungen für Typ des Säuremonomers (A): AS: Acrylsäure MAS: Methacrylsäure HEMA: Hydroxyethylmethacrylat | | | |

### Mörteltests

Die Mörteltests wurden entsprechend der Norm DIN EN 1015-3 durchgeführt. Als Zement wurde hier ein Karlstadt-Zement von Schwenk verwendet. Bei den Versuchen wurde ein Sand/Zement-Verhältnis von 2,2 eingesetzt. Dabei wurde eine Mischung aus 70 % Normensand (Normensand GmbH, Beckum) und 30 % Quarzsand benutzt. Das Wasser/Zementverhältnis wurde immer auf 0,43 eingestellt. Die Dosierung des Fließmittels ist in Gew. % Feststoff bezogen auf den Zement angegeben.

**Tabelle 3: Mörtelergebnisse mit Karlstadt Zement**

| | | Ausbreitmaß [cm] | | |
|---|---|---|---|---|
| Copolymer | Dosierung | 0 min | 10 min | 30 min |
| Glenium® ACE 440* | 0,17 | 24,2 | 25,9 | 25,6 |
| 1 | 0,23 | 23,4 | 21,6 | 19 |
| 2 | 0,18 | 23,5 | 23,3 | 21,7 |
| 3 | 0,22 | 24,5 | 23,1 | 21,3 |
| 5 | 0,21 | 23,7 | 22,1 | 19,2 |
| 6 | 0,18 | 23,5 | 23,3 | 21,7 |
| 7 | 0,4 | 23,8 | 24,2 | 21,8 |
| 8 | 0,21 | 23,6 | 25,2 | 25 |
| 9 | 0,32 | 23,9 | 24,1 | 22,7 |
| 10 | 0,33 | 23,8 | 23,3 | 23,2 |
| 11 | 0,33 | 23,7 | 24,1 | 23,8 |
| 12 | 0,25 | 25 | 23,3 | 20,4 |
| 13 | 0,3 | 24,5 | 24,8 | 23,8 |
| 14 | 0,3 | 24 | 25,2 | 23,9 |
| 15 | 0,32 | 24,4 | 24,1 | 22,7 |
| 16 | 0,25 | 25 | 23,3 | 20,4 |

| | | | | |
|---|---|---|---|---|
| *Glenium ACE 440 ist zum Vergleich ein Polycarboxylatether mit den Monomeren Acrylsäure, Maleinsäure und ethoxyliertem Hydroxybutylvinylether (lineare Seitenkette). Es ist erhältlich bei BASF Construction Chemicals Italia Spa. | | | | |

Die Dosierung des Fließmittels in der Tabelle 3 ist in Gew. % Feststoff bezogen auf den Zement angegeben.

Anhand dieser Ergebnisse wird deutlich, dass der Wasserbedarf, der notwendig ist, um einen Mörtel auf ein bestimmtes Ausbreitmaß zu verflüssigen, durch den Zusatz dieser Polymere drastisch verringert wird. Verzichtet man auf die Zugabe des Fließmittels, so wird ein Wasser-Zementverhältnis (W/Z) von 0,55 benötigt um ein Ausbreitmaß von 23-25 cm zu erhalten.

Die in der Seitenkette verzweigten Fließmittel benötigen, verglichen mit linearen Seitenketten (Vergleichsversuch mit Glenium® ACE 440), einen höheren Acrylsäureanteil, um eine ähnliche Verflüssigung zu erreichen.

Weitere Mörteltests mit Monselice Zement wurden mit einem Konus wie beschrieben in der DIN EN 1015-3 durchgeführt. Als Ergebnis sind die Fließmaße in der Tabelle 4 angegeben. Verwendet wurden folgende Materialien und Mörtelrezeptur:
Zement: Monselice CEM I 52,5 R
W/Z = 0.42-0.44
S/Z = 3 (Normensand (Normensand GmbH, Beckum)

Alle Polymere wurden als 20%-ige Lösungen eingesetzt, formuliert mit Entschäumer (4 Gew. % Tributylphosphat bezogen auf den Feststoff des Copolymers).

**Tabelle 4: Mörtelergebnisse mit Monselice Zement**

| Nr. des Copolymers | W/Z | Gew. % Feststoff Copolymer bezogen auf Zement | Flow [cm] | |
|---|---|---|---|---|
| | | | 0 min | 30 min |
| Glenium® ACE 440* | 0.44 | 0.24 | 131 | 131 |
| 6 | 0.44 | 0.60 | 133 | 100 |
| 2 | 0.44 | 0.32 | 129 | 97 |
| 1 | 0.44 | 0.32 | 127 | 95 |
| Glenium® ACE 440* | 0.42 | 0.24 | 110 | 112 |
| 7 | 0.42 | 0.60 | 114 | 100 |
| 8 | 0.42 | 0.36 | 112 | 105 |
| 10 | 0.42 | 0.44 | 110 | 103 |
| 9 | 0.42 | 0.40 | 108 | 93 |

| | | | | |
|---|---|---|---|---|
| * Glenium® ACE 440 ist ein Polycarboxylatether mit den Monomeren Acrylsäure, Maleinsäure und ethoxylierter Hydroxybutylvinylether. Es ist erhältlich bei BASF Construction Chemicals Italia Spa. | | | | |

### Betontests, einschließlich Messung der plastischen Viskosität

Als Zement für die Viskositätsmessungen wurden CEM I 52,5 von Montselice und ein weiterer CEM I 52,5 Zement verwendet. Folgendes Mischungsdesign wurde verwendet:

| | |
|---|---|
| Sand 0-4 | 1050 kg/m³ |
| Kies 8-12 | 770 kg/m³ |
| Zement Typ I 52.5 | 400 kg/m³ |
| Wasser | 180 kg/m³ |

Die Umgebungstemperatur war 20°C, die Fließmittel wurden als 20%-ige Lösungen, formuliert mit 4 Gew. % Entschäumer (Tributylphosphat) bezogen auf den Feststoff des Fließmittels eingesetzt.

Um vergleichbare Ergebnisse zu erhalten, wurde die Menge an Additiv so dosiert, dass alle Frischbetone einen Slump von 22 bis 24 cm nach 5 Minuten gemäß DIN EN 12350 aufweisen. Die Wasser-Zement-Verhältnisse wurden auf 0,45 eingestellt und die Messung wurde nach 5 Minuten, bzw. 20 Minuten durchgeführt. Die Ergebnisse sind in den Tabellen 5a (Zement Monselice) und 5b zusammengefasst.

Für den bestimmungsgemäßen Gebrauch spielt, abgesehen von der Verflüssigung, auch die Viskosität des Frischbetons eine bedeutende Rolle. Die Viskosität ist ein Maß für die Pump- und Verarbeitbarkeit des Frischbetons. Niedrigere Werte für die Viskosität führen zu einer besseren Verarbeitbarkeit und damit auch zu einer besseren Pumpbarkeit (Gleitrohr-Rheometer: Ein Verfahren zur Bestimmung der Fließeigenschaften von Dickstoffen in Rohrleitungen, Dissertation von Dr. Knut Jens Kasten, TU Dresden. Shaker Verlag; 1. Aufl. (Juli 2010)).

Die plastischen Viskositäten des Frischbetons wurden in einem IKAR-Rheometer (Referenz: E.P. Koehler, D.W. Fowler (2007). "ICAR Mixture Proportioning Procedure for SCC" International Center for Aggregates Research, Austin, TX.) gemessen.

**Tabelle 5a: Fließmaß und plastische Viskositäten mit Montselice CEM I 52,5 R**

| Copolymere | Gew. % Feststoff Copolymer bezogen auf Zement | Luftporengehalt (%) | Slump (cm) | | Plastische Viskosität µ (Pa*s) |
|---|---|---|---|---|---|
| | | | Fließmaß (cm) | | |
| | | | 5 Min | 20 Min | |
| Glenium® | 0,24 | 1.9 | 23 | 23 | 184 |
| ACE 440* | | | 43 | -- | |
| 1 | 0,35 | - | 24 | 23.5 | 151 |
| | | | 52 | 50 | |
| 2 | 0,3 | 1.9 | 22 | 21 | 152 |
| | | | 38 | 35 | |
| 6 | 0,42 | 1.8 | 23 | 23.5 | 147 |
| | | | 54 | 47 | |
| 10 | 0,46 | 2.3 | 21 | 16 | 128 |
| | | | -- | -- | |
| 8 | 0,36 | 2.0 | 23.5 | 23.5 | 140 |
| | | | 46 | 46 | |
| 9 | 0,4 | 2.1 | 24 | 24 | 136 |
| | | | 50 | 47 | |

| | | | | | |
|---|---|---|---|---|---|
| *Glenium®ACE 440 ist ein Polycarboxylatether mit den Monomeren Acrylsäure, Maleinsäure und ethoxylierter Hydroxybutylvinylether. Es ist erhältlich bei BASF Construction Chemicals Italia Spa. | | | | | |

**Tabelle 5b: Fließmaß und plastische Viskositäten mit CEM I 52,5 R**

| Copolymere | Gew. % Feststoff Copolymer bezogen auf Zement | Luftporengehalt [%] | Slump (cm) | | Plastische Viskosität µ (Pa*s) |
|---|---|---|---|---|---|
| | | | Fließmaß (cm) | | |
| | | | 5 Min | 20 Min | |
| Glenium® | 0,18 | 2.1 | 23.5 | 19 | 273 |
| ACE 440* | | | 46 | 30 | |
| 1 | 0,33 | 2.4 | 23 | 14 | 170 |
| | | | 37 | -- | |
| 2 | 0.21 | 2.8 | 23.5 | 12 | 187 |
| | | | 43 | -- | |

Kommerzielle Superverflüssiger sind oft Kammpolymere mit linearen Polyethylenglykolseitenketten (PEG Seitenketten). Diese Fließmittel führen jedoch bei Anwendung als Wasserreduzierer zu relativ hohen plastischen Viskositäten des Frischbetons. Dadurch wir die Pumpbarkeit und die Platzierbarkeit des Frischbetons in Formen erschwert.

Die erfindungsgemäßen Dispergiermittel verflüssigen Betone und ermöglichen es vor allem niedrige Viskositäten des Betons zu erzielen. Wie aus dem Vergleich von Glenium® ACE 440 und den erfindungsgemäßen Copolymeren ersichtlich ist, stellen die erfindungsgemäßen Polymere eine gute Möglichkeit dar, Frischbetone mit niedrigen Viskositäten auch bei relativ niedrigen W/Z-Werten herzustellen. Es soll noch angemerkt werden, dass die Viskosität des Betons ohne Fließmittelzusatz nicht adäquat gemessen werden konnte, da aufgrund der mangelnden Plastizität hier sonst deutlich höhere W/Z-Werte verwendet werden müssten.

## Patentansprüche

1. Verwendung eines Copolymers zum Dispergieren von anorganischen Bindemitteln, wobei das Copolymer als Comonomere einpolymerisiert enthält:
(A) mindestens ein ethylenisch ungesättigtes Säuremonomer,
(B) mindestens ein ethylenisch ungesättigtes, verzweigtes Polyethermakromonomer der allgemeinen Formel E-VₖLₖ₊₁, wobei
E eine ethylenisch ungesättigte Struktureinheit ist, welche mindestens eine Ether-, Carbonsäurester-, oder Carbonsäureamid-Struktureinheit umfasst,
V eine verzweigte Struktureinheit der Formel -CH(CH₂O-)₂ ist, und
L eine lineare Struktureinheit der Formel -[A¹O]ₗ-A² ist, wobei
A¹ jeweils unabhängig aus C₂-C₁₀-Alkylen, C₆-C₁₀-Arylen und/oder C₇-C₁₀-Aralkylen ausgewählt ist, vorzugsweise -C₂H₄-,
A² jeweils unabhängig aus C₁-C₃₀-Alkyl, C₃-C₁₀-Cycloalkyl, C₆-C₃₀-Aryl und/oder C₇-C₃₀-Aralkyl, vorzugsweise C₁-C₄ Alkyl, ausgewählt ist,
k eine ganze Zahl von 1 bis 7, vorzugsweise von 1 bis 3, ist und
l jeweils unabhängig eine ganze Zahl von 1 bis 350, vorzugsweise von 2 bis 100 insbesondere von 5 bis 70 und besonders bevorzugt von 7 bis 17 ist.

2. Verwendung nach Anspruch 1, **dadurch gekennzeichnet, dass** das anorganische Bindemittel aus Zementen, insbesondere Portlandzementen und Aluminatzementen, aus α-Calciumsulfathemihydrat, β-Calciumsulfathemihydrat, Anhydrit und Kalk, aus industriellen und synthetischen Schlacken, insbesondere Hochofenschlacke, Hüttensand, Hüttensandmehl, elektrothermischer Phosphorschlacke und Edelstahlschlacke, aus puzzolanischen Bindemitteln, insbesondere Flugaschen, vorzugsweise Braunkohleflugasche und Steinkohleflugasche, Mikrosilika, Metakaolin, natürlichen Puzzolanen, insbesondere Tuff, Trass und Vulkanasche, natürlichen und synthetischen Zeolithen, gebranntem Ölschiefer sowie Mischungen davon ausgewählt ist.

3. Verwendung nach Anspruch 1 oder 2, **dadurch gekennzeichnet, dass** das mindestens eine einpolymerisierte ethylenisch ungesättigte Säuremonomer (A) im Copolymer als eine der folgenden Struktureinheiten (la) bis (Id) vorliegt: 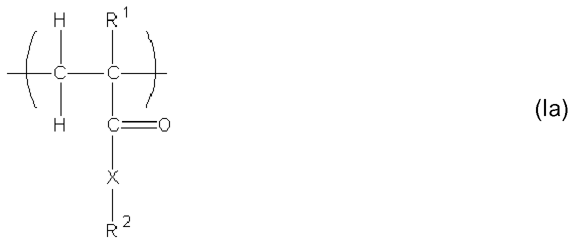 wobei
R¹ jeweils unabhängig aus H, einer unverzweigten und/oder einer verzweigten C₁-C₄-Alkylgruppe ausgewählt ist,
X jeweils unabhängig aus einer Einfachbindung, -NH-(CₘH₂ₘ)- und/oder -O-(CₘH₂ₘ)- ausgewählt ist, wobei m eine ganze Zahl von 1 bis 4 ist,
R² jeweils unabhängig aus -OM_{1/q}, -SO₃M_{1/q}, -PO₃M_{2/q}, -O-PO₃M_{2/q}, -C₆H₄-SO₃M_{1/q}, -C₆H₄-PO₃M_{2/q} und/oder -C₆H₄-OPO₃M_{2/q} ausgewählt ist, wobei M aus H, Alkalimetallen, Erdalkalimetallen, Aluminium und/oder Metallen der ersten Übergangsreihe ausgewählt ist und q die Ladungszahl von M darstellt, mit der Maßgabe, dass R² durch -OM_{1/q} repräsentiert ist, falls X eine Einfachbindung ist; 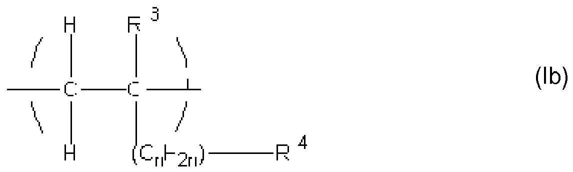
wobei
R³ die vorstehend für R¹ angegebene Bedeutung aufweist,
n eine ganze Zahl von 0 bis 4 ist,
R⁴ jeweils unabhängig aus -SO₃M_{1/q}, -PO₃M_{2/q}, -O-PO₃M_{2/q} und/oder -C₆H₄-SO₃M_{1/q} ausgewählt ist, wobei M und q die vorstehend genannten Bedeutungen aufweisen; 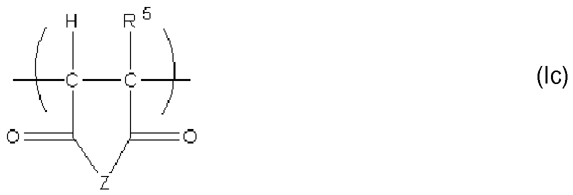
wobei
R⁵ die vorstehend für R¹ angegebene Bedeutung aufweist,
Z jeweils unabhängig aus -O- und/oder -NH- ausgewählt ist; 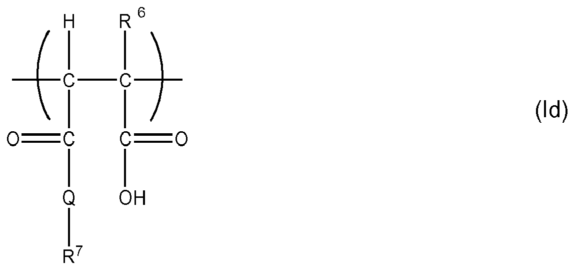
wobei
R⁶ die vorstehend für R¹ angegebene Bedeutung aufweist,
Q die vorstehend für X angegebene Bedeutung aufweist,
R⁷ die vorstehend für R² angegebene Bedeutung aufweist.

4. Verwendung nach Anspruch 3, **dadurch gekennzeichnet, dass** in der Formel (la)
R¹ H oder Methyl ist,
X jeweils unabhängig aus -NH-(CₘH₂ₘ)- und -O-(CₘH₂ₘ)- ausgewählt und bevorzugt -O-(C₂H₄)- oder -NH-(C(CH₃)₂CH₂)- ist und
R² -O-PO₃M_{2/q} oder -O-SO₃M_{1/q} ist,
wobei m, M und q die vorstehend angegebenen Bedeutungen aufweisen.

5. Verwendung nach einem der Ansprüche 1 bis 3, **dadurch gekennzeichnet, dass** das Säuremonomer (A) oder die Säuremonomere (A) ausgewählt ist oder sind aus (Meth)acrylsäure und deren Salzen, Maleinsäure, deren Halbestern, Halbamiden und Salzen, Maleinsäureanhydrid und/oder Hydroxyalkyl(meth)acrylsäurephosphorsäureestern und deren Salzen.

6. Verwendung nach einem der Ansprüche 1 bis 5, **dadurch gekennzeichnet, dass** das Copolymer als zusätzliches Comonomer ein unverzweigtes Polyethermakromonomer der allgemeinen Formel E-L einpolymerisiert enthält, wobei E und L die vorstehend angegebenen Bedeutungen aufweisen.

7. Verwendung nach einem der Ansprüche 1 bis 6, **dadurch gekennzeichnet, dass** die Struktureinheit E jeweils unabhängig aus einer Vinylether-, Allylether-, Isoprenylether-, (Meth)acrylsäureester-, (Meth)acrylsäureamid-, Maleinsäurehalbester- und/oder einer Maleinsäurehalbamid-Einheit ausgewählt ist.

8. Verwendung nach einem der Ansprüche 1 bis 6, **dadurch gekennzeichnet, dass** die ethylenisch ungesättigte Struktureinheit E als E*-S vorliegt, wobei E* jeweils unabhängig aus einer Vinylether-, Allylether-, (Meth)acrylsäureester- und/oder einer Maleinsäurehalbester - Einheit ausgewählt ist und S eine (Poly)alkylenglykoleinheit -[A³O]ₘ- ist, wobei
A³ jeweils unabhängig aus C₂-C₁₀Alkylen, C₆-C₁₀-Arylen und/oder C₇-C₁₀-Aralkylen ausgewählt ist, vorzugsweise ist A³ -C₂H₄-,
ₘ ist jeweils unabhängig eine ganze Zahl von 1 bis 50, bevorzugt von 2 bis 40, insbesondere bevorzugt von 5 bis 25.

9. Verwendung nach einem der Ansprüche 1 bis 8, **dadurch gekennzeichnet, dass**
A¹ jeweils unabhängig zu mehr als 60 mol % bezogen auf alle Struktureinheiten der Formel -[A¹O]ₗ als -C₂H₄- vorliegt,
A² jeweils unabhängig aus C₁-C₄ Alkyl ausgewählt ist,
k eine ganze Zahl von 1 bis 3 ist und
l jeweils unabhängig eine ganze Zahl von 2 bis 100 ist.

10. Verwendung nach einem der Ansprüche 1 bis 9, **dadurch gekennzeichnet, dass** das verzweigte Polyethermakomonomer (B) ein Molekulargewicht im Bereich von 700 bis 15.000 g/mol, bevorzugt von 1.500 bis 10.000 g/mol und besonders bevorzugt von 3.000 bis 8.000 g/mol aufweist.

11. Verwendung nach einem der Ansprüche 1 bis 10, **dadurch gekennzeichnet, dass** das molare Verhältnis von (A) Säuremonomer zu (B) Polyethermakromonomer von 20/1 bis 1/1 beträgt, bevorzugt 15/1 bis 1,5/1 und besonders bevorzugt von 10/1 bis 3/1.

12. Verwendung nach einem der Ansprüche 1 bis 11, **dadurch gekennzeichnet, dass** das Copolymer durch radikalische Polymerisation in Anwesenheit des ethylenisch ungesättigten Säuremonomers (A) und des ethylenisch ungesättigten Polyethermakromonomers (B) erhältlich ist, so dass insgesamt mindestens 45 mol-%, bevorzugt mindestens 80 mol-% aller Struktureinheiten des Copolymers durch Einpolymerisation von Säuremonomer (A) und Polyethermakromonomer (B) erzeugt wurden.

13. Dispergiermittel für anorganische Bindemittel, umfassend ein Copolymer gemäß der Definition eines der vorstehenden Ansprüche.

14. Baustoffmischung enthaltend anorganische Bindemittel, bevorzugt Zement, und ein Dispergiermittel gemäß Anspruch 13.
